# EUROPEAN PATENT SPECIFICATION

(11) **EP 1 862 343 B1**
(45) Date of publication and mention of the grant of the patent: **01.12.2010**
(21) Application number: 07008348.0
(22) Date of filing: 24.04.2007
(51) Int. Cl.: B60J 10/04

(54) **Glass run channel of automotive door window**
Glasführungsschiene die Scheibe in einer Autotür
Rail de glissière de vitre pour fenêtre de porte d'automobile

(30) Priority: 19.05.2006 JP 2006139718
(43) Date of publication of application: 05.12.2007
(73) Proprietor: Kinugawa Rubber Industrial Co., Ltd.,, Chiba-shi, Chiba 263-0005 (JP)
(72) Inventor: Mochida, Takaaki, Chiba-shi Chiba 263-0005 (JP)
(74) Representative: Grünecker, Kinkeldey, Stockmair & Schwanhäusser Anwaltssozietät

(56) References cited:
- EP-A2- 0 175 386
- FR-A1- 2 681 819
- JP-A- 2000 238 540
- US-A- 5 013 379
- US-A- 5 779 956
- US-A1- 2003 205 918
- US-A1- 2004 060 242
- US-A1- 2006 218 865
- US-B1- 6 412 226

## Description

### BACKGROUND OF THE INVENTION

### 1. Field of the Invention

The present invention relates in general to a glass run channel of automotive door window, that is mounted to an inner periphery of a door window frame for enabling a movable glass pane to slide therein, and more particularly to improvement in the glass run channel.

### 2. Description of the Related Art

Hitherto, various glass run channels have been proposed and put into practical use particularly in the field of automotive door windows, and various attempts have been made for obtaining a smooth and noiseless running of the movable glass pane in the glass run channel.

The document US 5 779 956 A discloses a glass run channel installed in a window frame for guiding a glass pane according to the requirements of Rule 42(1)(b) EPC. This background art glass run channel comprises a base structure of an elastic material, including a bottom portion and first and second side wall portions that extend in the same direction from respective ends of the bottom portion in a manner to define therebetween a given space whose bottom is defined by the bottom portion, the given space receiving therein an edge part of the glass pane;
first and second seal lips integral with the base structure and respectively extending from the first and second side wall portions toward the given space in a manner to resiliently put therebetween the edge part of the glass pane at their mutually facing main portions; and
a supporting lip integral with the base structure and extending from the first side wall portion toward the first seal lip,
wherein a given part of the supporting lip constantly contacts with the first seal lip to press the first seal lip against the edge part of the glass pane as long as the glass pane is set between the first and second seal lips and placed near the given part of the supporting lip, wherein the first seal lip is formed with a concave outer surface that faces toward the first side wall portion and slidably contacts with a leading portion of the supporting lip,
wherein the supporting lip (29) comprises
a base part integral with the first side wall portion;
a leading portion that extends from the base part toward the first seal lip,
the leading portion having a round top portion slidably contacting with the concave outer surface of the first seal lip; and
an elbow part provided between the base part and the leading portion.

One of such glass run channels hitherto proposed is disclosed in Japanese Laid-open Patent Application (Tokkai) 2000-280755.

In order to clarify the present invention, the glass run channel disclosed by this laid-open Patent Application will be briefly discussed in the following with reference to Figs. 4 and 5 of the accompanying drawings.

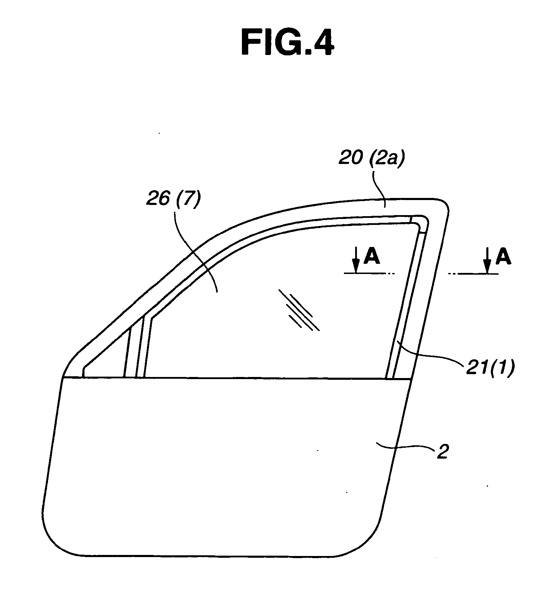

As is seen from Fig. 4, the glass run channel 1 shown in the drawing is designed for a front left door 2 of a motor vehicle. That is, the glass run channel 1 is constructed to be mounted to an inner periphery of a door window frame 2a of the front left door 2.

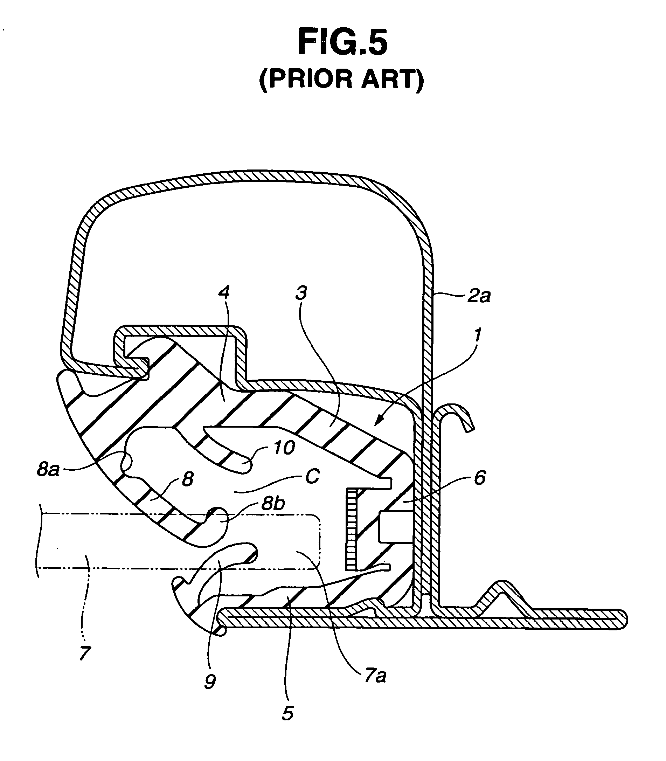

As is seen from Fig. 5, the glass run channel 1 is constructed of a rubber material and comprises generally a longitudinally extending main body portion 3 that is snugly received in a channel portion defined by the door window frame 2a and has a generally U-shaped cross section, longitudinally extending inside and outside wall portions 4 and 5 that are integral with inside and outside leading parts of the main body portion 3, and longitudinally extending first and second seal lips 8 and 9 that extend from leading ends of the inside and outside wall portions 4 and 5 toward a bottom part 6 of the main body portion 3, as shown. The first and second seal lips 8 and 9 are arranged to closely and resiliently put therebetween a glass pane 7 in a manner to achieve a hermetical sealing therebetween.

As is shown, the first seal lip 8 is formed at its root portion with a notch (more specially, a groove extending along the entire construction of the glass run channel 1) 8a by which the first seal lip 8 is easily flexed toward the inside of the vehicle upon receiving a certain external force. Furthermore, the first seal lip 8 is formed at its leading end with a projection (more specifically, a ridge extending along the entire construction of the glass run channel 1) 8b that projects toward the inside of the vehicle.

The inside wall portion 4 is integrally formed with a longitudinally extending sub-lip 10 that extends generally in parallel with the first seal lip 8, as shown.

In operation, the glass pane 7 is moved upward or downward keeping lateral ends 7a thereof put and guided by the first and second seal lips 8 and 9.

Once the glass pane 7 is moved up to its fully closed uppermost position as ma be understood from Fig. 4, the first and second seal lips 8 and 9 function to tightly hold the glass pane 7 in position. When, under this condition, an external force is applied to the glass pane 7 to bias the same in a direction toward the inside of the vehicle, the first seal lip 8 is flexed in the same direction. Upon this, the projection 8b of the lip 8 is brought into contact with the sub-lip 10, and thus the inward inclination of the glass pane 7 is supported by both the lips 8 and 10. Thus, an exceeding inward inclination of the glass pane 7 is suppressed. Thus, in the glass run channel 1 proposed by the above-mentioned Japanese Laid-open Patent Application, the closing/opening movement of the glass pane 7 is smoothly and reliably carried out even if the door window frame 2a, the glass run channel 1 and the glass pane 7 fail to have a precise assembly.

### SUMMARY OF THE INVENTION

However, due to its inherent construction, the glass run channel 1 of the above-mentioned Laid-open Application fails to provide passengers of the vehicle with a satisfaction for the following reasons.

That is, usually, irrespective of whether the glass pane 7 is being moved or stopped, the projection 8b of the first seal lip 8 and the sub-lip 10 are kept separated from each other. However, when for example the vehicle is running on a rough road, the glass pane 7 kept closed is forced to incline inward and outward repeatedly. This repeated inward and outward inclination induces touching and detaching between the projection 8b and the sub-lip 10 producing contact noises, which make the passengers feel uncomfortable. It has been revealed that such noises become much remarkable when the glass pane 7 takes a slightly open position.

Accordingly, it is an object of the present invention to provide a glass run channel which is free of the above-mentioned drawbacks.

According to the present invention, there is provided a glass run channel wherein a member that corresponds to the above-mentioned projection 8b and another member that corresponds to the above-mentioned sub-lip 10 constantly contact to each other.

In accordance with a first aspect of the present invention, there is provided a glass run channel installed in a window frame for guiding a glass pane, which comprises a base structure of an elastic material, including a bottom portion and first and second side wall portions that extend in the same direction from respective ends of the bottom portion in a manner to define therebetween a given space whose bottom is defined by the bottom portion, the given space receiving therein an edge part of the glass pane; first and second seal lips integral with the base structure and respectively extending from the first and second side wall portions toward the given space in a manner to resiliently put therebetween the edge part of the glass pane at their mutually facing main portions; and a supporting lip integral with the base structure and extending from the first side wall toward the first seal lip, wherein a given part of the supporting lip constantly contacts with the first seal lip to press the first seal lip against the edge part of the glass pane as long as the glass pane is set between the first and second seal lips and placed near the given part of the supporting lip.

In accordance with a second aspect of the present invention, there is provided a glass run channel assembly which comprises a window frame having a generally U-shaped cross section including a base panel and first and second side panels that extend in the same direction from opposed ends of the base panel thereby to define therebetween a first given space; a glass run channel of an elastic material held in and by the window frame, the glass run channel including a bottom portion that is received in the first given space near the base panel of the window frame, first and second side wall portions that extend in the same direction from respective ends of the bottom portion in a manner to define therebetween a second given space, first and second seal lips that are respectively integral with the first and second side wall portions and extend from the same toward the second given space in a manner to resiliently put therebetween an edge part of a glass pane at their mutually facing mina portion; and a supporting lip that is integral with the first side wall portion and extends from the same toward the first seal lip, wherein a given part of the supporting lip constantly contacts with the first seal lip to press the same against the edge part of the glass pane as long as the glass pane is set between the first and second seal lips and placed near the given part of the supporting lip.

### BRIEF DESCRIPTION OF THE DRAWINGS

Other objects and advantages of the present invention will become apparent from the following description when taken in conjunction with the accompanying drawings, in which:
Fig. 1 is a sectional view of a glass run channel of the present invention in a condition wherein the glass run channel is properly installed in a window frame and a glass pane is properly set in the glass run channel;
Fig. 2 is a view similar to Fig. 1, but showing a position where the glass pane does not reach;
Fig. 3 is a graph showing characteristics of a first seal lip and a supporting lip that constitute parts of the glass run channel of the invention;
Fig. 4 is a plan view of a front left door of a motor vehicle to which a glass run channel of the present invention is applicable; and
Fig. 5 is an enlarged sectional view of a known glass run channel, that is a view corresponding to the view taken along the line A-A of Fig. 4.

### DETAILED DESCRIPTION OF THE INVENTION

In the following, a glass run channel of the present invention will be described in detail with reference to the accompanying drawings.

For ease of understanding, various directional terms, such as, right, left, upper, lower, rightward and the like are used in the description. However, such terms are to be understood with respect to only a drawing or drawings on which a corresponding part or portion is shown.

Referring to Fig. 4, there is shown a front left door 2 of a motor vehicle, to which a glass run channel 21 of the present invention is practically applied. The front left door 2 is equipped with a door window frame 20 in which a glass pane 26 runs upward and downward through the glass run channel 21.

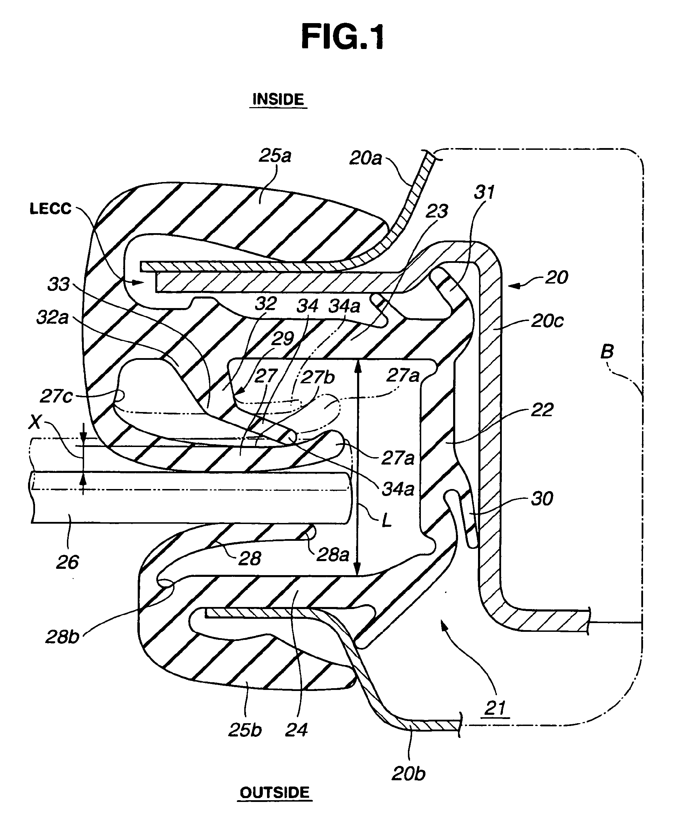

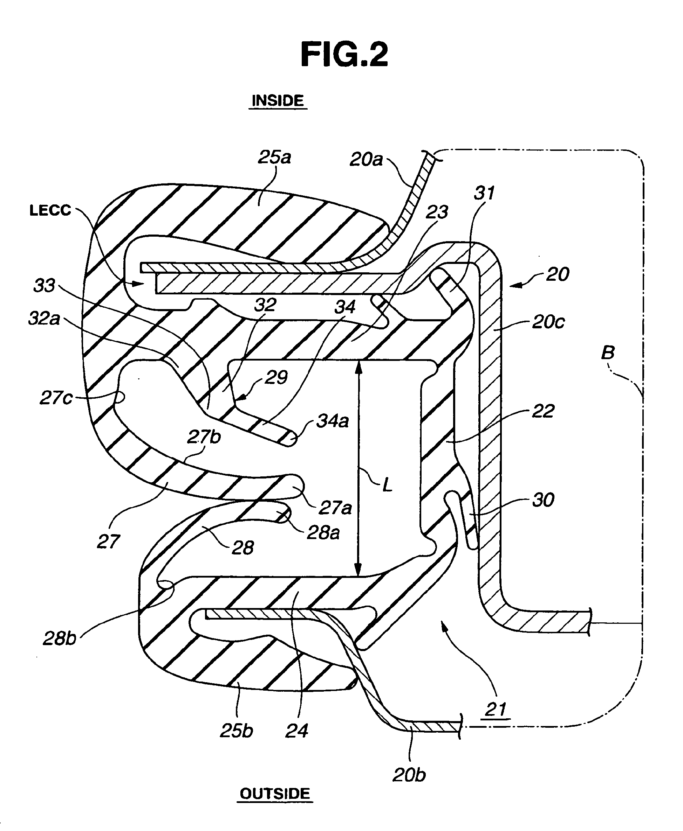

Referring to Figs. 1 and 2, particularly Fig. 1, there is shown but in a sectional manner the glass run channel 21 of the present invention in a condition wherein the glass run channel 21 is properly installed in the door window frame 20.

In the illustrated example, the door window frame 20 comprises generally a longitudinally extending inner panel 20a, a longitudinally extending outer panel 20b and a longitudinally extending reinforcing panel 20c. As is seen from the drawing, the inner and outer panels 20a and 20b are integral parts that extend leftward from a common base portion "B". While the reinforcing panel 20c is secured at its right edge to the common base portion "B" via welding or the like.

The reinforcing panel 20c is arranged between the inner and outer panels 20a and 20b and has an inward shifted leading part secured to the inner panel 20a via welding or the like. As shown, the three panels 20a, 20b and 20c of the door window frame 20 are assembled together to constitute a longitudinally extending channel construction "LECC" for mounting therealong the glass run channel 21 of the invention.

As is best seen from Fig. 1, the glass run channel 21 is constructed of an elastic material, such as rubber or the like through extrusion molding and comprises a bottom portion 22 that is put on a flat base part of the reinforcing panel 20c, inside and outside wall portions 23 and 24 that extend leftward in the drawing from both ends of the bottom portion 22, respective bent back portions 25a and 25b that extend back rightward from the leftward leading ends of the inside and outside wall portions 23 and 24 while receiving or holding therein a combined part of the inside panel 20a and the reinforcing panel 20c and the outside panel 20b respectively, a first seal lip 27 that extends back rightward and inwardly from the leftward leading end of the inside wall portion 23 toward the bottom wall 22, a second seal lip 28 that extends back rightward and inwardly from the leftward leading end of the outside wall portion 24 toward the bottom wall 22, and a supporting lip 29 that extends rightward inwardly from a middle portion of the inside wall portion 23 toward the bottom portion 22.

As is seen from Fig. 2, when, due to taking a lower open position by the glass pane 26, no external force is applied, vertically upper parts of the first and second seal lips 27 and 28 are biased to contact to each other at their leading end portions 27a and 28a, and the supporting lip 29 is kept separated from the first seal lip 27.

While, as is seen from Fig. 1, when the glass pane 26 comes up to an upper open illustrated position, the first and second seal lips 27 and 28 become separated by the glass pane 26 while being pressed against opposed surfaces of the glass pane 26.

Referring back to Fig. 2, the bottom portion 22 is formed with holding lips 30 and 31 that are pressed against the reinforcing panel 20c.

As shown, when the glass run channel 21 is properly set on the longitudinally extending channel construction "LECC" of the door window frame 20, a certain clearance of a given distance "L" is defined between mutually facing surfaces of the inside and outside wall portions 23 and 24. The distance "L" is so determined as to permit a certain inward and outward inclination of the glass pane 26 (see Fig. 1) in the glass run channel 21.

As shown in the drawing (Fig. 2), under the non-stressed condition, the leading end 27a of the first seal lip 27 is in contact with the leading end 28a of the second seal lip 28 while projecting slightly beyond the leading end 28a toward the bottom portion 22.

The first seal lip 27 has a concave outer surface 27b that faces the supporting lip 29, and has at its root portion a notch 27c (more specifically, a groove extending along the entire construction of the glass run channel 21) for adjusting a counterforce against which flexing of the first seal lip 27 toward the supporting lip 29 is carried out.

The second seal lip 28 has a concave outer surface that faces the outside wall portion 24, and has at its root portion a notch (more specifically, a groove extending along the entire construction of the glass run channel 21) 28b for adjusting a counterforce against which flexing of the second seal lip 28 toward the outside wall portion 24 is carried out.

As shown in Fig. 2, the supporting lip 29 has a thinner leading portion 34 that is slightly inclined toward the inside wall portion 23. More specifically, the supporting lip 29 comprises a thicker base portion 32 that is integral with the inside wall portion 23 and the thinner leading portion 34 is integrally connected to the thicker base portion 32 through an elbow part 33. The thicker base portion 32 that extends from its base part 32a to the elbow part 33 is inclined at a given small angle toward the bottom wall 22, as shown. Furthermore, the thicker base portion 32 has a substantially trapezoidal cross section whose thickness gradually reduces with increase of a distance from the base part 32a.

As shown, the thinner leading portion 34 of the supporting lip 29 has a generally even thickness therethroughout and has a round top portion 34a.

It is to be noted that when, due to the glass pane 26 assuming a lower position relative to the door window frame 20, substantially no stress is applied to the portion of the glass run channel 21 that is shown in Fig. 2, the round top portion 34a of the thinner leading portion 34 is kept away from the concave outer surface 27b of the first seal lip 27 keeping a certain distance therebetween.

However, as is seen from Fig. 1, once the glass pane 26 is raised up to the position that is shown in this drawing, the first seal lip 27 is flexed by the glass pane 26 toward the supporting lip 29 causing the concave outer surface 27b thereof to constantly contact with the round top portion 34a of the supporting lip 29 with a certain biasing force. It is to be noted that under this condition, the concave outer surface 26b and the round top portion 34a are kept in contact with each other.

For ease of description of operation, movement of the glass pane 26 in a direction that is substantially perpendicular to a vertical direction along which the glass pane 26 moves upward or downward for closing or opening the door window will be referred to "shifting" in the following.

As is understood from Fig. 1, when the glass pane 26 is moved up from its lowermost open position to its uppermost full close position, the glass pane 26 is forced to shift inward, due to an inwardly curved structure of the channel construction "LECC" of the door window frame 20 by a given degree "X" that is about the thickness of the first seal lip 27. That is, in the illustrated embodiment, once the glass pane 26 comes up to the uppermost full close position, the same is forced to shift to its innermost position pressing the first seal lip 27 to fully or deeply contact with the thinner leading portion 34 of the supporting lip 29, as is indicated by phantom line in Fig. 1.

In the following, the movement of the glass pane 26 in the glass run channel 21 will be described with the aid of Figs. 1 and 2 for the purpose of understanding a unique operation of the glass run channel 21, particularly, a unique action of the first seal lip 27 and that of the supporting lip 29 of the glass run channel 21.

As may be seen from Fig. 1, when the glass pane 26 is in a slightly open position as is indicated by a solid line, the concave outer surface 27b of the first seal lip 27 is in contact with the round top portion 34a of the supporting lip 29. Under this condition, the mutual contact between the two portions 27b and 34a is assuredly made due to a force produced when the thinner leading portion 34 of the supporting lip 29 is bent by the first seal lip 27. Thus, under this condition, the two portions 27b and 34a have little chance to be separated, that is, little chance to make noise by them. It is to be noted that under this condition, movement of the glass pane 26 toward the uppermost close position is easily carried out because the counterforce possessed by the thinner leading portion 34 is not so large.

When the glass pane 26 is moved up to its uppermost full close position, the glass pane 26 is shifted inward to the position as indicated by the phantom line for the reason as is mentioned hereinabove. In such full close position of the glass pane 26, the concave outer surface 27b of the first seal lip 27 deeply contacts with the thinner leading portion 34 of the supporting lip 29 as indicated by the phantom line. Under this condition, the two portions 27b and 34 are tightly pressed against each other because of the increased counterforce produced when the thinner leading portion 34 is largely bent by the first seal lip 27. Thus, under this condition, the two portions 27b and 34 have substantially no chance to be separated, that is, substantially no chance to make noise by them. Thus, even when the vehicle runs at a high speed on a rough road with the door window kept closed, possibility of producing any noise by the glass run channel 21 is suppressed or at least minimized. Furthermore, even if the door is strongly closed with the door window kept closed, such uncomfortable noise is not produced from the glass run channel 21 for the above-mentioned reasons.

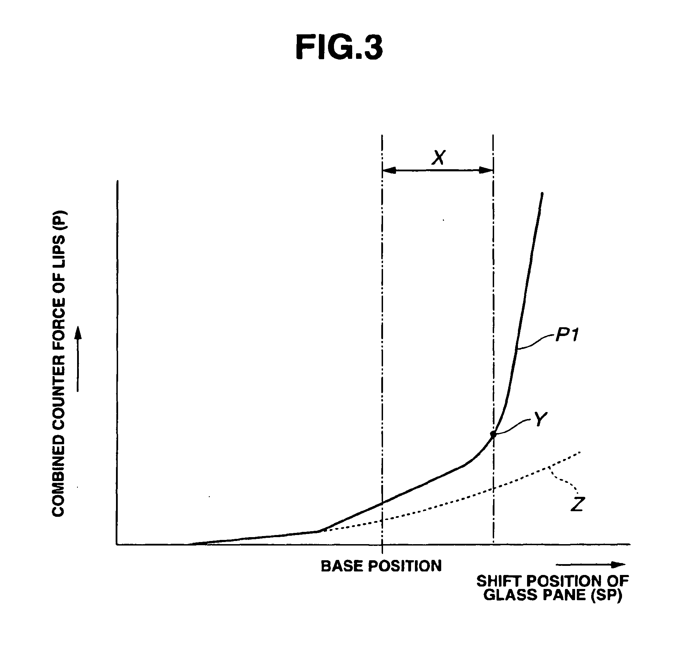

Referring to Fig. 3, there is shown a graph that depicts a relationship between a shift position (SP) of the glass pane 26 in the glass run channel 21 and a combined counterforce (P) of the first seal lip 27 and the supporting lip 29. For comparison with the present invention, a reference example "Z" is also shown that is a case wherein only the first seal lip 27 is employed. That is, there is no lip that corresponds to the supporting lip 29.

It is to be noted that the shift position (SP) of the glass pane 26 indicates a lateral moved distance of the glass pane 26 from its normally set position (which is provided when the glass pane 26 is in its lowermost full open position) and the combined counterforce (P) is a total force of the first seal and supporting lips 27 and 29 that is applied to the inner surface of the glass pane 26 (see Fig. 1).

As is seen from the graph of Fig. 3, when the glass pane 26 is within the above-mentioned given shift range "X", the combined counterforce (P) gradually increases as the glass pane 26 is shifted inward, that is, toward the inside of the vehicle. This means that within the given range "X", a smoothed and comfortable upward and downward movement of the glass pane 26 is carried out. Actually, under such condition, the combined counterforce (P) is kept relatively small.

As is seen from the graph, when, due to, for example, a strong close action of the door, the glass pane 26 is forced to exceed the given range "X", the combined counterforce (P) is shapely increased at the point "Y" and thereafter shows a high gradient characteristic as indicated by "P1". This is because under such condition, the first seal lip 27 (see Fig. 1) becomes in contact with the elbow part 33 of the supporting lip 29 and thus applied with a stronger counterforce by the thicker base portion 32. Thus, undesired excessive shifting of the glass pane 26 in the glass run channel 21 is suppressed.

In the following, advantages of the present invention will be described.

As is understood hereinabove, in the glass run channel 21 of the present invention, the first seal lip 27 and the supporting lip 29 are forced to contact with each other so long as the glass pane 26 takes their near position. Thus, undesired noise, that would be produced by the repeated separation/contact motions of the two lips 27 and 29 under cruising of the vehicle, is suppressed or at least minimized.

As is seen from Fig. 1, when the glass pane 26 is set in the glass run channel 21, the round top portion 34a of the supporting lip 29 is in contact with the concave outer surface 27b of the first seat lip 27. This means that the inward or outward shifting of the glass pane 26 due to upward or downward movement of the same induces a smoothed movement or slipping of the round top portion 34a on and along the concave outer surface 27b, and thus the upward or downward movement of the glass pane 26 for closing or opening the door window is smoothly carried out.

Actually, when the glass pane 26 is gradually shifted inward when the same is moved upward, the generated force received by the thinner leading portion 34 from the concave outer surface 27b of the first seal lip 27 is gradually transmitted to the thicker base portion 32 of the supporting lip 29 while gradually flexing the thinner leading portion 34 inward. Accordingly, the supporting force of the thinner leading portion 34 has no effect on a smooth upward and downward movement of the glass pane 26, which can reduce the shifting of the glass pane 26 in the glass run channel 21.

As is seen from the graph of Fig. 3, when the glass pane 26 is within the given shift range "X", the combined counterforce produced by the two lips 27 and 29 gradually increases as the glass pane 26 is shifted inward, and thus, smoothed upward and downward movement of the glass pane 26 along the glass run channel 21 is carried out.

Furthermore, against a big shock such as one produced when the door is strongly closed, the elbow part 33 of the supporting lip 29 serves as a stopper for stopping an excessive inward shifting of the glass pane 26.

Furthermore, since the thicker base portion 32 has the trapezoidal cross section as shown in Fig. 1, the same can exhibit an ideal shock absorbing performance against a shock applied to the elbow part 33 of the supporting lip 29 by the glass pane 26.

## Claims

1. A glass run channel (21) installed in a window frame (20) for guiding a glass pane (26), comprising:
a base structure of an elastic material, including a bottom portion (22) and first and second side wall portions (23,24) that extend in the same direction from respective ends of the bottom portion (22) in a manner to define therebetween a given space whose bottom is defined by the bottom portion (22), the given space receiving therein an edge part of the glass pane (26);
first and second seal lips (27,28) integral with the base structure and respectively extending from the first and second side wall portions (23,24) toward the given space in a manner to resiliently put therebetween the edge part of the glass pane (26) at their mutually facing main portions; and
a supporting lip (29) integral with the base structure and extending from the first side wall portion (23) toward the first seal lip (27),
wherein a given part of the supporting lip (29) constantly contacts with the first seal lip (27) to press the first seal lip (27) against the edge part of the glass pane (26) as long as the glass pane (26) is set between the first and second seal lips (27,28) and placed near the given part of the supporting lip (29),
wherein the first seal lip (27) is formed with a concave outer surface (27b) that faces toward the first side wall portion (23) and slidably contacts with a leading portion of the supporting lip (29),
wherein the supporting lip (29) comprises
a thicker base part (32) integral with the first side wall portion (23);
a thinner leading portion (34) that extends from the thicker base part (32) toward the first seal lip (27) and has a generally even thickness therethroughout, the thinner leading portion (34) having a round top portion (34a) slidably contacting with the concave outer surface (27b) of the first seal lip (27); and
an elbow part (33) provided between the thicker base part (32) and the thinner leading portion (34), and
wherein the thicker base part (32) is inclined by a given angle toward the bottom portion (22) of the base structure.

2. A glass run channel as claimed in claim 1, in which the base structure further comprises:
a first bent back portion (25a) that is integral with the first side wall portion (23) and bent back from a top of the same to be put on an inner panel (20a) of the window frame (20); and
a second bent back portion (25b) that is integral with the second side wall portion (24) and bent back from a top of the same to be put on an outer panel (20b) of the window frame (20).

3. A glass run channel as claimed in claim 1, in which the elbow part (33) of the supporting lip (29) is constructed to stop an excessive shifting of the first seal lip (27) toward the first side wall portion (23) due to shifting of the glass pane (26) toward the first side wall portion (23).

## Patentansprüche

1. Fensterführungsprofil (21), das in einem Fensterrahmen (20) installiert ist, um eine Glasscheibe (26) zu führen, wobei es umfasst:
eine Basisstruktur aus einem elastischen Material, die einen unteren Abschnitt (22) und einen ersten sowie einen zweiten Seitenwandabschnitt (23, 24) umfasst, die sich von jeweiligen Enden des unteren Abschnitts (22) so in der gleichen Richtung erstrecken, dass zwischen ihnen ein bestimmter Raum gebildet wird, dessen Unterseite durch den unteren Abschnitt (22) gebildet wird, wobei der bestimmte Raum einen Kantenteil der Glasscheibe (26) aufnimmt;
eine erste und eine zweite Dichtungslippe (27, 28), die integral mit der Basisstruktur ausgebildet sind und sich von dem ersten bzw. dem zweiten Seitenwandabschnitt (23, 24) so in Richtung des bestimmten Raums erstrecken, dass der Kantenteil der Glasscheibe (26) an ihren einander zugewandten Hauptabschnitten elastisch zwischen sie eingesetzt wird; und
eine Tragelippe (29), die integral mit der Basisstruktur ausgebildet ist und sich von dem ersten Seitenwandabschnitt (23) auf die erste Dichtungslippe (27) zu erstreckt,
wobei ein bestimmter Teil der Tragelippe (29) konstant mit der Dichtungslippe (27) in Kontakt ist, um die erste Dichtungslippe (27) an den Kantenteil der Glasscheibe (26) zu drücken, solange die Glasscheibe (26) zwischen die erste und die zweite Dichtungslippe (27, 28) eingesetzt ist und in der Nähe des bestimmten Teils der Tragelippe (29) angeordnet ist, und die erste Dichtungslippe (27) mit einer konkaven Außenfläche (27b) versehen ist, die dem ersten Seitenwandabschnitt (23) zugewandt ist und gleitend mit einem vorderen Abschnitt der Tragelippe (29) in Kontakt kommt,
wobei die Tragelippe (29) umfasst
einen dickeren Basisteil (32), der integral mit dem ersten Seitenwandabschnitt (23) ausgebildet ist;
einen dünneren vorderen Abschnitt (34), der sich von dem dickeren Basisteil (32) auf die erste Dichtungslippe (27) zu erstreckt und durchgehend eine im Allgemeinen gleichmäßige Dicke aufweist, wobei der dünnere vordere Abschnitt (34) einen runden oberen Abschnitt (34a) hat, der gleitend in Kontakt mit der konkaven Außenfläche (27b) der ersten Dichtungslippe (27) ist; und
einen Bogenteil (33), der zwischen dem dickeren Basisteil (32) und dem dünneren vorderen Abschnitt (34) vorhanden ist, und
wobei der dickere Basisteil (32) um einen bestimmten Winkel zu dem unteren Abschnitt (22) der Basisstruktur hin geneigt ist.

2. Fensterführungsprofil nach Anspruch 1, wobei die Basisstruktur des Weiteren umfasst:
einen ersten zurückgebogenen Abschnitt (25a), der integral mit dem ersten Seitenwandabschnitt (23) ausgebildet ist und von einer Oberseite desselben her so zurückgebogen ist, dass er auf einer inneren Platte (20a) des Fensterrahmens (20) aufliegt; und
einen zweiten zurückgebogenen Abschnitt (25b), der integral mit dem zweiten Seitenwandabschnitt (24) ausgebildet ist und von einer Oberseite desselben her so zurückgebogen ist, dass er auf einer äußeren Platte (20b) des Fensterrahmens (20) aufliegt.

3. Fensterführungsprofil nach Anspruch 1, wobei der Bogenteil (33) der Tragelippe (29) so aufgebaut ist, dass er eine zu starke Verschiebung der ersten Dichtungslippe (27) zu dem ersten Seitenwandabschnitt (23) hin aufgrund von Verschiebung der Glasscheibe (26) zu dem ersten Seitenwandabschnitt (23) hin zum Halten bringt.

## Revendications

1. Rail de glissière de vitre (21) installé dans un encadrement de fenêtre (20), destiné à guider un panneau de verre (26), comportant :
une structure de base constituée d'un matériau élastique, comportant une partie inférieure (22) et des première et seconde parties de paroi latérale (23, 24) qui se prolongent selon la même direction à partir des extrémités respectives de la partie inférieure (22), de manière à définir entre elles un espace donné dont le bas est défini par la partie inférieure (22), l'espace donné recevant une partie de bordure du panneau de verre (26) ;
des première et seconde lèvres d'étanchéité (27, 28) faisant partie intégrante de la structure de base et se prolongeant respectivement à partir des première et seconde parties de paroi latérale (23, 24) en direction de l'espace donné afin de positionner de manière résiliente entre elles la partie de bordure du panneau de verre (26) sur leurs parties principales mutuellement opposées ; et
une lèvre de support (29), faisant partie intégrante de la structure de base, et se prolongeant à partir de la première partie de paroi latérale (23) en direction de la première lèvre d'étanchéité (27),
dans lequel une partie donnée de la lèvre de support (29) est en contact constant avec la première lèvre d'étanchéité (27) pour presser la première lèvre d'étanchéité (27) contre la partie de bordure du panneau de verre (26) tant que le panneau de verre (26) est placé entre les première et seconde lèvres d'étanchéité (27, 28) et placé à proximité de la partie donnée de la lèvre de support (29), dans lequel la première lèvre d'étanchéité (27) est constituée d'une surface extérieure concave (27b) qui se trouve en opposition en direction de la première partie de paroi latérale (23) et qui entre en contact par glissement avec une partie avant de la lèvre de support (29),
dans lequel la lèvre de support (29) comporte
une partie de base plus épaisse (32), faisant partie intégrante de la première partie de paroi latérale (23) ;
une partie de tête plus mince (34), qui se prolonge à partir de la partie de base plus épaisse (32) en direction de la première lèvre d'étanchéité (27) et qui possède une épaisseur généralement constante, la partie de tête plus mince (34) possédant une partie d'extrémité arrondie (34a) qui entre en contact par glissement avec la surface extérieure concave (27b) de la première lèvre d'étanchéité (27) ; et
une partie formant coude (33), placée entre la partie de base plus épaisse (32) et la partie de tête plus mince (34), et
dans lequel la partie de base plus épaisse (32) est inclinée d'un angle donné en direction de la partie inférieure (22) de la structure de base.

2. Rail de glissière de vitre selon la revendication 1, dans lequel la structure de base comporte en outre :
une première partie recourbée (25a), faisant partie intégrante de la première partie de paroi latérale (23) et recourbée à partir d'une extrémité de celle-ci pour être placée sur un panneau intérieur (20a) de l'encadrement de fenêtre (20) ; et
une seconde partie recourbée (25b), faisant partie intégrante de la seconde partie de paroi latérale (24) et recourbée à partir d'une extrémité de celle-ci pour être placée sur un panneau extérieur (20b) de l'encadrement de fenêtre (20).

3. Rail de glissière de vitre selon la revendication 1, dans lequel la partie formant coude (33) de la lèvre de support (29) est construite pour stopper un déplacement excessif de la première lèvre d'étanchéité (27) en direction de la première partie de paroi latérale (23) du fait d'un déplacement du panneau de verre (26) en direction de la première partie de paroi latérale (23).
